# EUROPEAN PATENT APPLICATION

(11) **EP 1 741 348 A1**
(43) Date of publication of application: **10.01.2007**
(21) Application number: 06116669.0
(22) Date of filing: 05.07.2006
(51) Int. Cl.: A23L 1/18, A23P 1/10, A23P 1/14

(54) **Machine for the production of cereal cakes.**

(30) Priority: 08.07.2005 IT RM20050363
(71) Applicant: Balconi Automazioni S.r.l., 20093 Cologno Monzese MI (IT)
(72) Inventor: Balconi, Andrea, 20047, Brugherio (Milano) (IT); Balconi, Marco, 48016, CERVIA MILANO MARITTIMA (Ravenna) (IT)
(74) Representative: Siniscalco, Fabio

(57) **Abstract**

The present invention relates to an apparatus (1) for the production of cereal cakes, comprising:
a compression/heating system for the formation of at least one cake; and a supporting structure suitable for the support of the compression/heating system. The compression/heating system includes:
- an upper plate (24), which is heatable and is stationary in respect to said supporting structure;
- a lower plate (22), which is heatable, opposing said upper plate (24) and movable in respect to said upper plate (24); and
- an intermediate plate (23), which is movable in respect to said lower plate (22) and said upper plate (24) and is interposed between them. The lower plate (22) and the intermediate plate (23) are mutually approachable and each approachable to the upper plate (24) in order to form at least a compression/cooking chamber for the production of at least one cake from at least a respective dose of the cereal.

## Description

The present invention relates to the technical field of food industry machines and, particularly, relates to an apparatus for the production of cereal cakes, such as rice cakes.

In the field of food industry, it is widely known the use of apparatuses including heated presses suitable for the pressure-crushing and the heating of convenient doses of cereals, in order to form cereal wafers commonly known as "cakes".

The state of the art apparatuses include opposing presses, which are heatable and moveable in order to be mutually approached and averted. The actuation of the opposing presses is commonly achieved by respective, opposing, hydraulic cylinders, driven by a gear case with a pump electric motor located at the base of the machine. Further, in such apparatuses, the gearing-up of the thrust, which is needed to obtain a sufficient pressure for the crushing of the cereal, is achieved by systems consisting of levers, pivots and rods and articulated joints typically lubricated with grease.

It has been observed that the aforementioned apparatuses for producing cereal cakes are scarcely appropriate, or even incompatible, for an use in an environment in which hygienic conditions suitable for the treatment of food stuff are required. This is caused by the presence of lubricants on articulated joints, rods and levers, by the unavoidable presence of hydraulic oil, which is due to blow-by and sweating phenomena, by the presence of a self-ventilated motor which, as such, tends to raise dust nearby the apparatus.

Further, the apparatuses known in the art turn out to be rather cumbersome and require completely mechanical adjustments, which are inconvenient and inaccurate.

It is an object of the present invention to provide an apparatus for producing cereal cakes which is able to overcome the aforementioned problems, in reference to the previous art.

Said purpose is achieved through an apparatus as described, in general, in the appended claim 1. Advantageous embodiments of an apparatus according to the invention are defined in the dependent claims.

More features and advantages of the apparatus according to the invention shall be clear through the following specification of one of its non-limiting examples of embodiment, wherein:
- figure 1 shows an axonometric view of an apparatus for producing cereal cakes, in a particularly preferred embodiment of the invention;
- figure 2 shows a side plain view of the apparatus of figure 1;
- figure 3 shows a front plain view of the apparatus of figure 2, with some of its parts partially dissected.

Referring to the appended figures, with the numeral 1 is globally designed an apparatus, or machine, for producing cereal cakes, or wafers. In particular, in a particularly preferred embodiment, the apparatus 1 is an apparatus for producing rice cakes.

The apparatus 1 includes a supporting structure, preferably a metal structure, and preferably including a substantially plate-like basement 2, destined to rest - and possibly to be fastened - onto the ground, and at least two vertical rods 3, substantially mutually parallel and connected to the base 2.

The metal supporting structure of the apparatus 1 further includes a first cross member 6 connected to the vertical rods 3, on which two further rods 4, 5, preferably shaped as a cylindrical pillar and part of the metal supporting structure, are based and fastened. The metal supporting structure further includes a second cross member 7, on which are mounted and fastened second ends of both vertical rods 4, 5, opposing to the first ends connected to the first cross member.

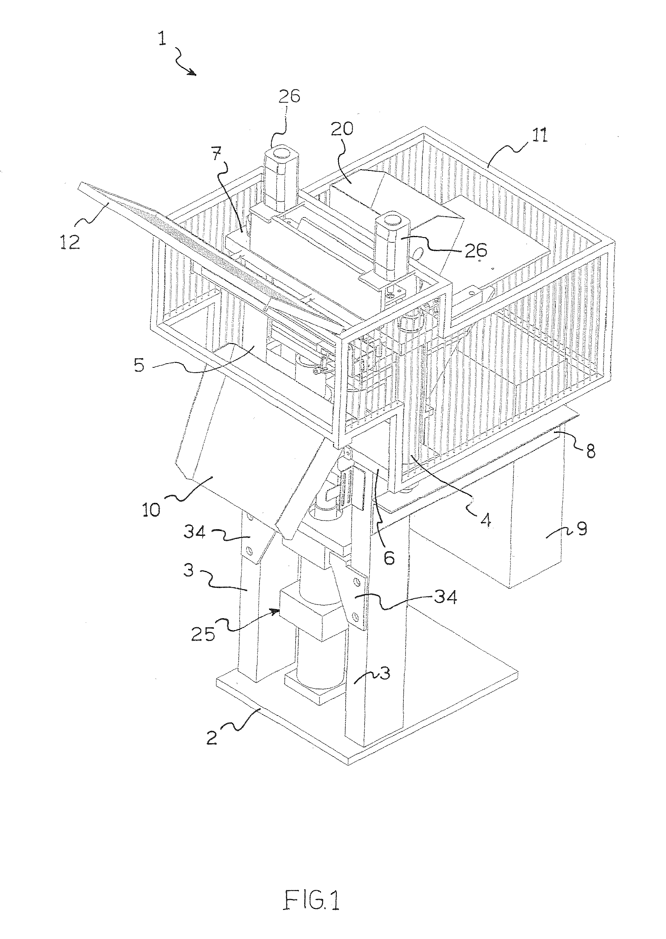

The metal supporting structure further includes two horizontal brackets 8 (only one shown in figure 1), having preferably an "L" shape profile, each one of them is connected to a respective vertical rod 3. The horizontal brackets 8 are intended to support a power supply and management unit included in the apparatus 1 and depicted in the figure only schematically.

As depicted in figure 1, the apparatus 1 further includes:
- a hopper 20, which acts as a reservoir for loose rice and includes an outlet, not seen in the figure, at its bottom;
- a chute 10, fastened to the cross member 6, provided for cakes' ejection;
- a protecting structure 11, which serves to prevent a dangerous touch of an operator with hot and/or moving parts of the apparatus 1.

In a particularly advantageous embodiment, the protecting structure 11 includes a protection cage 11 with a stainless steel anti-finger screen. Preferably, such cage 11 is provided with one or more openable doors, such as the door 12 of the apparatus 1 depicted in figure 1.

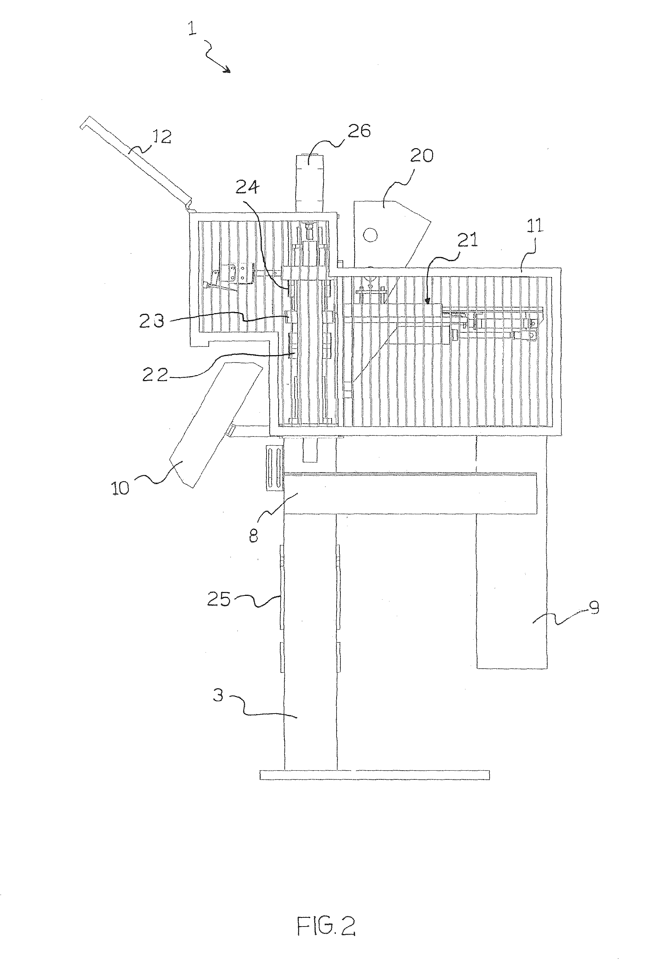

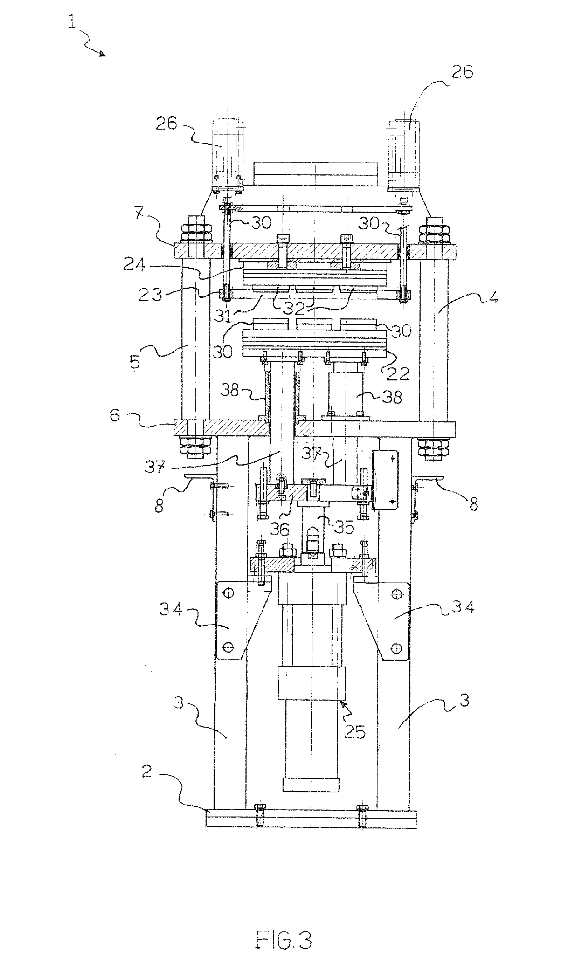

The supporting metal structure of the apparatus 1 further supports a compression/heating system and a distribution/dosing system for the cereal, which will be better described in the following in reference to the figures 2 and 3.

In figure 2 is shown a side plain view of the apparatus in figure 1. In particular, in figure 2 it is at best evident the heating/compression system and it is further evident the distribution/dosing system, globally referred as 21.

The heating/compression system advantageously comprises a stationary and heatable upper plate 24, and a movable and heatable lower plate 22, opposing to the upper plate 24. The heating/compression system further includes, an intermediate movable plate 23, interposed between the upper plate 24 and the lower plate 22.

The heating/compression system further includes:
- first linear-movement driving means 25, operably connected to the lower plate 22 in order to move said plate along a direction which is substantially perpendicular to the stationary upper plate 24.
- second linear-movement driving means 26, operably connected to the intermediate plate 23, in order to move said plate independently in respect to the lower plate 22 and along a direction which is substantially perpendicular to the stationary upper plate 24.

Referring to figure 3, in a particularly advantageous embodiment of the present invention, the first driving means 25, connected through brackets 34 to the vertical rods 3, include an hydro pneumatic cylinder with an intensifier, and particularly a pneumatic drive cylinder provided with a seal-circuit oil-supplied chamber as an intensifier.

In practice, advantageously, such hydro pneumatic circuit 25 includes a pneumatic section for the approach of the lower plate 22 towards the upper plate 23, and an hydraulic section (hydraulic cylinder, or intensifier) suitable to fulfil the last phase of the stroke of the lower plate 22 towards the upper plate 23, in order to achieve the cereal compression. For example, in a total stoke equal to 25-30 mm, the hydraulic section is able to intervene for moving the lower plate in the last 5-9 mm of the total stoke of the ram 35 of the hydro pneumatic cylinder 25.

In a particularly preferred embodiment, the high pressure circuit of the hydro pneumatic cylinder 25 includes, between the oil tank and said cylinder, a buffer valve provided with a TEFLON gasket. Advantageously, such valve prevents the formation of tiny air bubbles in the incompressible fluid (oil). More preferably, the high pressure circuit is of the kind lacking in air accumulation reservoir (which in practice represents a sort of lung for the activation of the intensifier). It has been observed, in fact, that the presence of such an accumulation reservoir is not such as to provide any advantage and further gives the drawback of the generation of undesired air refluxes.

In a particularly preferred embodiment, the hydraulic pressure which is generated by the intensifier is controlled by a force regulator, which advantageously permits a manually operated change of the pressure exerted inside the cooking molds, or chambers. In practice, such a regulator is such as to intervene on the multiplication factor of the force exerted by the hydraulic cylinder.

As shown in figure 3, in the apparatus 1 the ram 35 of the cylinder 25 is operably connected through a connection plate 36 with two cylindrical rods 37, connected in their turn with the base of the lower plate 22. Two bushings 38, fixed to the cross member 6, guide the movement of said cylindrical rods 37, due to the movement of the ram 35. In a particularly preferred embodiment, the cylindrical rods 37 and the bushings 38 are of the not lubrication-subjected kind and, preferably, in chromium-plated steel.

In a particularly preferred embodiment, the diving means of the intermediate plate 23 include two pneumatic drive linear actuators 26, which are connected to the intermediate plate 23 through a further pair of cylindrical rods 30, passing through fitting holes in the cross member 7.

In a particularly preferred embodiment, both the upper plate 24 and the lower plate 22 include one or more differentiated power, cylindrical resistors, housed in suitable cylindrical cavities achieved in the plate thickness. In practice, each of these resistors is such as to develop a variable heat quantity along its linear extension direction, so to heat in larger extent the peripheral portions of the plate in comparison with the central portions. This expedient permits to achieve an optimum qualitative level of the final product, providing a remarkable cooking and fragrance uniformity of the cake. In a particularly preferred embodiment, both the lower plate 22 and upper plate 24 are provided of three of such substantially cylindrical resistors, which are substantially equally spaced and have a length about equivalent to the length in prevailing extension of the plate.

Referring to figure 3, the upper plate 24, which is firmly fastened to the supporting structure and particularly to the cross member 7, includes a plurality of punches 32, which in the particular given example are in the number of three, opposing and substantially coaxial to respective punches provided on the lower plate 22. Obviously, according to the number of cakes to be produced in each cooking cycle, it is possible to provide, on the lower plate 22 and on the upper plate 23, a higher or lower number of punches.

The intermediate plate 23 has a plurality of through holes 31, each of them is substantially coaxial with a respective punch 32 of the upper plate 24, and with the matching opposing punch 30 belonging to the lower plate 22, in order to define, during the matching of the three plates 22, 23, 24, a respective bursting/cooking chamber for the preparation of a respective cake.

In a particularly advantageous embodiment, the plates 22, 23 and 24 are in stainless steel and their portions bound to enter in contact with the cereal are superficially treated with gold-plating (in practice, they have said portions covered with a very thin, or micrometric, gold layer). Such a superficial treatment, removing possible porosities of the stainless steel surface, advantageously permits to achieve an easy detachment of the cake, avoiding the use of detaching substances (even foodstuff substances).

The distribution/dosing system 21 preferably includes a dosing drawer, which is horizontally movable, by pneumatic drive means, between a rest position, in which said drawer lies in a distal position as regards such plates, and is at least partially overlapping the lower plate 22 and the intermediate plate 23. The dosing drawer includes calibrated through holes, or dosing holes. Said dosing holes, whenever the dosing drawer lies in its rest position, are substantially aligned with the outlet of the reservoir 20, so to be replenished, by gravity, with the rice content of the reservoir itself. The distribution/dosing system 21 further includes a retaining plate, which is horizontally slidable even as regards the dosing drawer. Said slidable plate is positioned at the bottom of the dosing drawer and, in practice, acts as a shutter and:
- moving with regard to the dosing drawer, prevents the discharge of rice from the dosing holes when said dosing drawer remains in its rest position and during all its movement until the achievement of the working position;
- moving with regard to the dosing drawer, when said drawer reaches its working position, it permits the emptying of the dosing holes, in order to fill the bursting/cooking chambers formed by the matching of the intermediate plate 23 and the lower plate 22.

In operation, the apparatus 1 performs an automatic processing cycle (which is managed by a suitable software), including the steps of:
- loading of the cereal in the dosing drawer and pre-heating of the upper plate and the lower plate;
- advancement of the dosing drawer and loading of the cereal in the vanes which are defined by the matching of the lower plate and the intermediate plate;
- withdrawal of the dosing drawer and approaching of the lower plate (by pneumatic drive) and the intermediate plate (by pneumatic drive) to the upper plate in order to close the cooking moulds;
- cooking of the cereal inside the cooking mould, with constant pressure application (with intervention of the hydraulic intensifier) onto the cereal;
- opening of the cooking mould and subsequent automatic ejection of the produced cakes.

As shall be appreciated by the foregoing specification, an apparatus according to the invention permits to overcome the aforementioned drawbacks associated with the known art apparatuses.

Obviously, in order to fulfil contingent and specific demands, several modifications and variations of the aforesaid apparatus for producing cereal cakes will be apparent to those skilled in the art. It is therefore intended that the following claims encompass any such modifications or variations.

## Claims

1. An apparatus (1) for the production of cereal cakes, comprising:
- a compression/heating system for the formation of at least one cake; and
- a supporting structure suitable for the support of the compression/heating system;
**characterized in that** said compression/heating system includes:
- an upper plate (24), which is heatable and is stationary in respect to said supporting structure;
- a lower plate (22), which is heatable, opposing said upper plate (24) and movable in respect to said upper plate (24); and
- an intermediate plate (23), which is movable in respect to said lower plate (22) and said upper plate (24) and is interposed between them,
the lower plate (22) and the intermediate plate (23) being mutually approachable and each approachable to the upper plate (24) in order to form at least a compression/cooking chamber for the production of at least one cake from at least a respective dose of the cereal.

2. An apparatus (1) according to claim 1, wherein the compression/heating system further includes first linear movement driving means (25) operably connected to the lower plate (22) in order to move the lower plate along a direction which is substantially perpendicular in respect to the upper plate (24).

3. An apparatus (1) according to claim 2, wherein the first linear movement driving means (25) include a pneumatic drive cylinder provided with a seal-circuit oil-supplied chamber as a pressure intensifier.

4. An apparatus (1) according to claim 3, wherein said cylinder (25) includes a pneumatic section which is in charge of the approaching of said lower plate (22) to said upper plate (24) and an hydraulic section suitable to fulfil a last phase of the stroke of the lower plate towards said upper plate, in order to achieve the compression of at least a portion of the cereal.

5. An apparatus (1) according to claims 3 or 4, further including an oil tank connected to said cylinder and a buffer valve which is interposed between said tank and said cylinder, said buffer valve being provided with a TEFLON gasket.

6. An apparatus (1) according to claim 3, wherein said cylinder includes an high pressure cylinder of the kind lacking in air accumulation reservoir.

7. An apparatus (1) according to claim 3, wherein said compression/heating system further includes a regulator for changing the intensifying rate of said pressure.

8. An apparatus (1) according to claim 2, wherein said supporting structure includes a pair of bushings (38) fastened to said structure and wherein said heating/compression system includes a pair of cylindrical rods (37), which are slidable in said bushings (38) in order to operably connect said first driving means (25) to said lower plate (22), and wherein said cylindrical rods and said bushings are of the not lubrication-subjected kind.

9. An apparatus (1) according to any of the claims 2-8, wherein said compression/heating system includes second linear movement driving means (26), operably connected to said intermediate plate (23) in order to move said plate independently from said lower plate (22) and along a direction which is substantially perpendicular in respect to said upper plate (24).

10. An apparatus(1) according to claim 9, wherein said second driving means include two pneumatic drive linear actuators (26).

11. An apparatus (1) according to any of the preceding claims, wherein said plates (22, 23, 24) are constructed in stainless steel and their portions bound to enter in contact with the cereal are superficially treated with gold-plating.

12. An apparatus (1) according to any of the preceding claims, wherein both the upper plate (24) and the lower plate (22) include one or more differentiated power, cylindrical resistors, housed in suitable cylindrical cavities achieved in the thickness of said plates.

13. An apparatus (1) according to any of the preceding claims, further comprising a protecting structure which includes a protection cage (11) with a stainless steel anti-finger screen.
